# EUROPÄISCHE PATENTSCHRIFT

(11) **EP 1 826 454 B1**
(45) Veröffentlichungstag und Bekanntmachung des Hinweises auf die Patenterteilung: **28.04.2010**
(21) Anmeldenummer: 07002878.2
(22) Anmeldetag: 10.02.2007
(51) Int. Cl.: F16F 9/512

(54) **Schwingungsdämpfer mit amplitudenselektiver Dämpfkraft**
Vibration damper with selective damping force amplitude
Amortisseur d'oscillations doté d'une force d'amortissement à amplitude sélective

(30) Priorität: 24.02.2006 DE 102006008675
(43) Veröffentlichungstag der Anmeldung: 29.08.2007
(73) Patentinhaber: ZF Friedrichshafen AG, 88046 Friedrichshafen (DE)
(72) Erfinder: Hammer, Thomas, 97653 Bischofsheim (DE)

(56) Entgegenhaltungen:
- DE-A1- 4 238 728
- FR-A- 2 070 461
- GB-A- 2 250 080
- US-A- 5 386 892

## Beschreibung

Die Erfindung betrifft einen Schwingungsdämpfer mit amplitudenselektiver Dämpfkraft gemäß dem Oberbegriff von Patentanspruch 1.

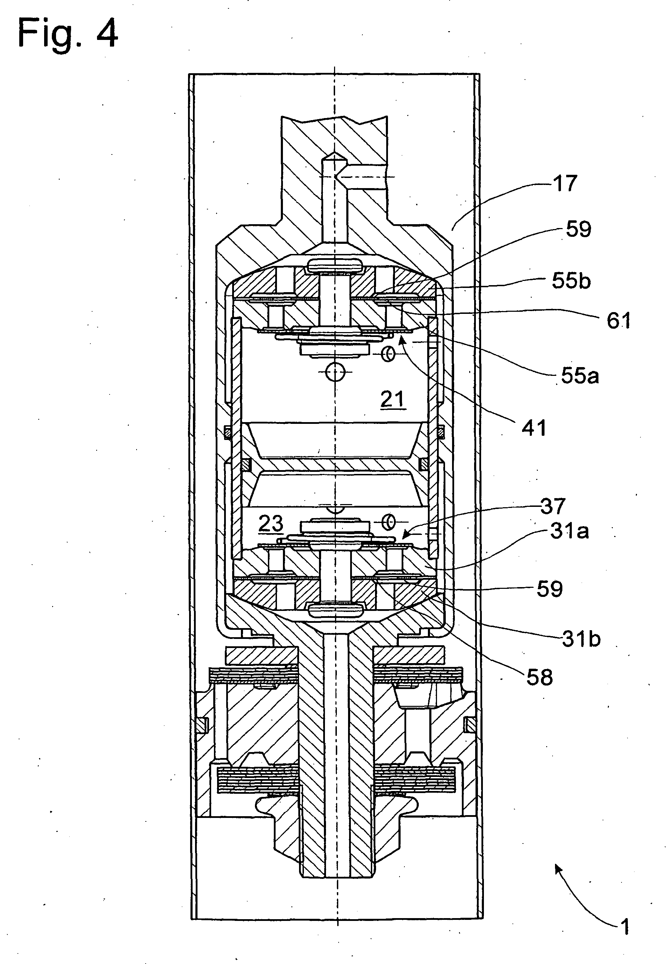

Aus der gattungsbildenden EP 1 496 285 A2 ist ein Schwingungsdämpfer mit amplitudenselektiver Dämpfkraft bekannt, bei dem ein scheibenförmiges Trennelement innerhalb eines Gehäuses eine Axialbewegung ausführt. Das durch die Kolbenstange verdrängte Dämpfmediumvolumen wird über einen Bypasskanal zu einem Dämpfventil von einer Arbeitskammer in dem Gehäuse aufgenommen. Wenn das verdrängte Dämpfmediumvolumen die Arbeitskammer maximal gefüllt hat, nimmt das Trennelement eine Endanschlagposition an einem Ende des Gehäuses ein. An dem Trennelement ist ein elastischer Anschlag angeordnet, der einerseits Anschlaggeräusche vermeiden und einen weicheren Dämpfkraftübergang zum Dämpfventil bewirken soll. In der Ausführung nach Fig. 4 kommt ein Trennelement zur Anwendung, das in Richtung eines Kolbenstangenzapfens über einen dornartigen Fortsatz verfügt, der in einen Axialkanal zum kolbenstangenfernen Arbeitsraum eintaucht und diesen zunehmend verschließt.

Die GB 2 250 080 A und die US 5 386 892 ist ein frequenzselektiver Schwingungsdämpfer bekannt, an dessen Kolbenstange ein Gehäuse befestigt ist, in dem ein Trennelement zwei Arbeitskammern voneinander trennt. In der Ruhelage bis zu einer definierten Kolbenstangenbewegung besteht eine wechselweise geöffnete Strömungsverbindung zwischen den beiden Arbeitsräumen Schwingungsdämpfers, so dass das Dämpfmedium parallel zu den Trennelemente fließen kann, da beide Arbeitskammern im Gehäuse zumindest in der Ruhestellung des Kolbens mit beiden Arbeitsräumen des Zylinders verbunden ist. Damit wirken die Schwingungsdämpfer nach amplitudenselektiv.

Aufgabe der vorliegenden Erfindung ist es, eine Alternativlösung für das Problem der Geräuschbildung und des weichen Dämpfkraftübergangs zu schaffen.

Erfindungsgemäß wird die Aufgabe dadurch gelöst, dass der Anschlussquerschnitt von mindestens einer radialen Öffnung in der Arbeitskammer gebildet wird und das Trennelement mit der radialen Öffnung ein Schieberventil bildet.

Das Trennelement verändert bei einer Axialbewegung den wirksamen Querschnitt und damit eine Drosselwirkung der radialen Öffnung. Die Drosselwirkung verhindert ein geräuschvolles Anschlagen des Trennelements in seine Endlagenstellung. Des Weiteren wird ein weicher Übergang zum Einsatz des Dämpfventils erreicht.

Gemäß einem vorteilhaften Unteranspruch sind mehrere radiale Öffnungen in axialem Abstand ausgeführt. Mit zunehmendem Hubweg des Trennelements können die radialen Öffnungen überfahren werden.

Des Weiteren ist vorgesehen, dass die Arbeitskammer in Füllrichtung mit einem sich öffnenden Rückschlagventil verbunden ist. Es soll vermieden werden, dass sich in einer Arbeitskammer des Gehäuses ein Unterdruck aufbaut, der die amplitudenselektive Wirkung des Schwingungsdämpfers beeinträchtigt.

Bei einer vorteilhaften Ausgestaltung ist das Rückschlagventil an einem zur Anschlussöffnung separaten Einlasskanal angeschlossen.

Alternativ kann in dem Gehäuse ein Rohreinsatz angeordnet sein, der zumindest einen Teil einer Arbeitskammer und mit der Innenwandung des Gehäuses für mindestens eine der Arbeitskammer einen separaten Einlasskanal bildet.

ln weiterer vorteilhafter Ausgestaltung ist zwischen der Innenwandung des Gehäuses und dem Rohreinsatz ein umlaufender Steg ausgeführt, der die beiden Einlasskanäle voneinander trennt. Der umlaufende Steg kann von dem Gehäuse oder dem Rohreinsatz getragen werden.

Der Rohreinsatz verspannt axial zumindest mit einem Ende des Gehäuses einen Ventilkörper des Rückschlagventils.

Des Weiteren kann vorgesehen sein, dass der Ventilkörper aus zwei geschichteten, Ventilkörperscheiben besteht und zwischen den beiden Ventilkörperscheiben eine Voröffnungsscheibe mit einem den Abfluss aus einer Arbeitskammer des Gehäuses bestimmenden Voröffnungsquerschnitt verspannt ist. Durch eine gezielte Auswahl der Voröffnungsscheibe kann die Dämpfkraftkennlinie im Bereich der amplitudenabhängigen Dämpfung gezielt angepasst werden.

Gemäß einem vorteilhaften Unteranspruch ist der Rohreinsatz mit mindestens einer Anschlussöffnung ausgeführt, die in ihrem wirksamen Querschnitt veränderbar ist.

Dadurch kann die minimale amplitudenabhängige Dämpfkraft einer gewünschten Kennlinie angepasst werden, ohne zusätzliche oder andere Bauteile zu verwenden.

Dabei ist ein Ringelement mit einer Einstellöffnung zum Rohreinsatz verstellbar angeordnet.

Das Ringelement ist radial mit dem Rohreinsatz verspannt und kann dabei innen- oder außenseitig anliegen. Als Ringelement kann auch ein Ringsegment dienen, das sich über einen Umfangswinkel von mehr als 180° erstreckt.

Bei einer alternativen Lösung begrenzen der Rohreinsatz und das Gehäuse mindestens einen Kanal, wobei die mindestens Anschlussöffnung durch eine Verdrehbewegung des Rohreinsatzes relativ zum Gehäuse in Überdeckung gebracht werden kann.

Anhand der folgenden Figurenbeschreibung soll die Erfindung näher erläutert werden.

Es zeigt:
- Fig. 1: Amplitudenselektiver Schwingungsdämpfer mit einem separaten Einlasskanal für eine Arbeitskammer
- Fig. 2: Schwingungsdämpfer mit einem Rohreinsatz im Gehäuse für die amplitudenselektive Dämpfkraft
- Fig. 3: Alternative zur Fig. 2 mit Gehäuse im kolbenstangenfernen Arbeitsraum
- Fig.4: Einstellbarer Voröffnungsquerschnitt in einem scheibenförmig geteilten Ventilkörper
- Fig. 5: Einstellbarer Voröffnungsquerschnitt durch verdrehbares Ringelement
- Fig. 6 u. 7: Einstellbarer Voröffnungsquerschnitt durch Verdrehung eines Rohreinsatzes relativ zu einem Gehäuse

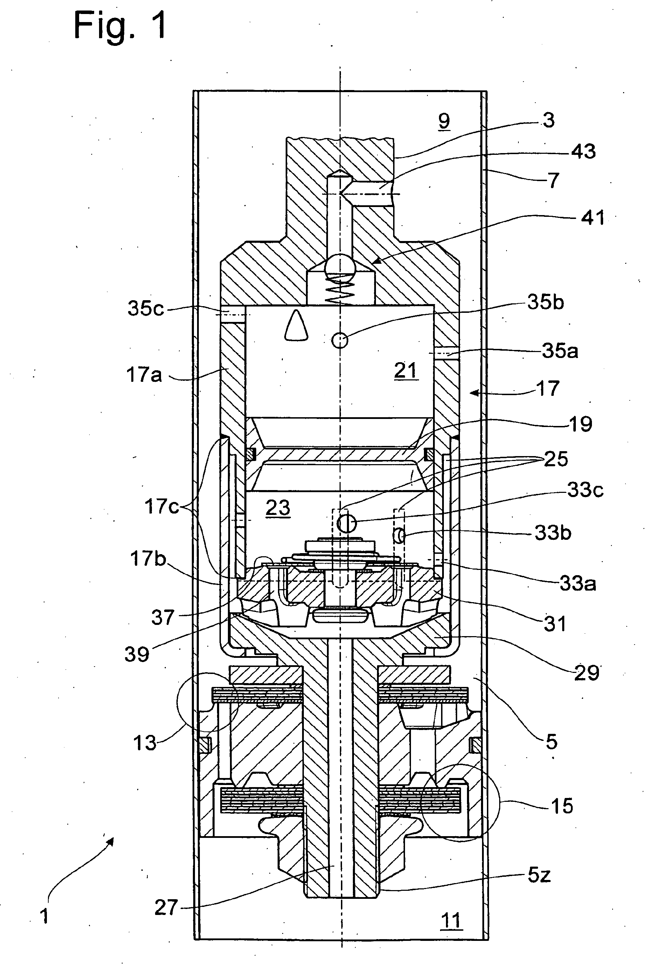

Die Figur 1 zeigt einen Ausschnitt von einem Schwingungsdämpfer 1 im Bereich eines an einer Kolbenstange 3 befestigten Kolbens 5. Der Schwingungsdämpfer umfasst einen mit Dämpfmedium gefüllten Zylinder 7, der von dem Kolben 5 in zwei Arbeitsräume 9; 11 unterteilt wird. In dem Kolben 5 sind mit Ventilscheiben bestückte Dämpfventile 13; 15 für die Ein- und Ausschubrichtung der Kolbenstange ausgeführt. Die Kolbenstange 3 trägt, in diesem Fall im kolbenstangenseitigen Arbeitsraum 9, ein Gehäuse 17, in dem ein scheibenförmiges Trennelement 19 zwei Arbeitskammern 21, 23 voneinander trennt. Das Gehäuse 17 ist zweigeteilt ausgeführt und besteht aus zwei topfartigen Elementen 17a; 17b, die auf einem Längenabschnitt 17c ineinander geschoben sind und im Bereich der Überlappung einen Ringraum 25 bilden. Die untere Arbeitskammer 23 in Richtung des Kolbens 5 ist über einen Axialkanal 27 im Kolbenstangenzapfen 5z mit dem kolbenstangenfernen Arbeitsraum 11 verbünden. Zwischen einem Boden 29 des Gehäuses 17 und einem Rückschlagventilkörper 31 mündet der Axialkanal 27 im Gehäuse 17 und steht mit dem Ringraum 25 in Verbindung. In dem Längenabschnitt17c des oberen topfartigen Elements 17a sind in axialem Abstand mehrere radiale Öffnungen 33a -33c ausgeführt, die einen Anschlussquerschnitt zum Ringraum 25 bestimmen. Auch die obere Arbeitkammer 21 verfügt über mehrere radiale Öffnungen 35a - 35c mit axialem Abstand. Alternativ kann auch eine einzige radiale Öffnung 35 mit abnehmender Breite in Richtung des Endes der jeweiligen Arbeitskammer 21; 23 verwendet werden, wie gestrichelt dargestellt ist.

Der Rückschlagventilkörper 31 verfügt über eine federkraftbelastete Rückschlagventilscheibe 37; die in Füllrichtung der Arbeitskammer 23 abhebt und mindestens einen Durchlass 39 freigibt. Die obere Arbeitskammer 21 verfügt ebenfalls über ein Rückschlagventil 41, z. B. in der Bauform eines Kugelventils, das an einem zu den radialen Öffnungen 35a - 35c separaten Einlasskanal 43 angeschlossen ist.
Ausgehend von einer Betriebsstellung des Trennelements 19 am oberen Ende des Gehäuses 17 kann das Dämpfmedium bei einer Ausschubbewegung des Kolbens 5 aus dem Zylinder in Pfeilrichtung A über den Einlasskanal 43 und das geöffnete Rückschlagventil 41 in die obere Arbeitskammer 21 des Gehäuses 17 einströmen. Das scheiberiförmige Trennelement 19 bildet mit der radialen Öffnungen 35a - 35c ein Schieberventil, das dabei noch geschlossen ist. Mit zunehmender Hubbewegung strömt Dämpfmedium in die obere Arbeitskammer 21 und verschiebt das scheibenförmige Trennelement 19 in Richtung des Rückschlagventils 31. Das aus der unteren Arbeitskammer 23 verdrängte Dämpfmedium kann über die geöffneten radialen Öffnungen 33a - 33c in den Ringraum 25 und dann weiter durch den Axialkanal 27 in den kolbenstangenfernen Arbeitsraum 11 abfließen. Dabei wird, wenn überhaupt, nur eine vergleichsweise kleine Dämpfkraft erzeugt. Wenn das scheibenförmige Trennelement 19 weiter in Richtung des unteren Endes des Gehäuses verschoben wird, üben die radialen Öffnungen 33a - 33c in der unteren Arbeitskammer 23 mit der Mantelfläche 19m Trennelement 19 eine Schieberventilfunktion aus. Das Trennelement 19 verschließt nach und nach die radialen Öffnungen 33a - 33c, so dass der wirksame Anschlussquerschnitt in Richtung des Ringraums 25 abnimmt und sich zunehmend eine Dämpfkraft einstellt. Das Rückschlagventil 37 ist bei dieser Bewegungsrichtung des Trennelements 19 geschlossen. Wenn die untere Endstellung des Trennelements erreicht ist, hat sich das Dämpfventil 15 oder wird dann vom Druck im kolbenstangenfernen Arbeitsraum 9 geöffnet.

Bei einer Einschubbewegung des Kolbens 5 in Richtung des kolbenstangenfernen Arbeitsraums 11 sind bei Vorliegen der Endlage des Trennelements 19 die radialen Öffnungen 33a - 33c soweit verschlossen, dass ein hydraulischer Kurschluss nicht auftreten kann. Das Rückschlagventil 37 öffnet und es baut sich in der unteren Arbeitskammer 23 eine Druckkraft auf, die das Trennelement 19 in Richtung des oberen Endes des Gehäuses 17 verschiebt. Das Rückschlagventil 41 am Einlasskanal ist geschlossen. Genauso wie bei einer Ausschubbewegung des Kolbens 5 wird auch bei einer Einschubbewegung der Trennelement 1 im Gehäuse anfangs ohne oder nur mit einer geringen Dämpfwirkung verschoben, bis die radialen Öffnungen 35a - 35c nach und nach von dem scheibenförmigen Trennelement 19 verschlossen werden. Bei einer einzigen radialen Öffnung 35 wird der wirksame Anschlussquerschnitt entsprechend verkleinert. Durch eine Verdrehung der Gehäuseteile 17a; 17b verändern sich die Überlappungen der Öffnungen 33a - 33cmit den Axialkanälen 25, wodurch sich der wirksame Abflussquerschnitt stufenlos einstellen lässt.

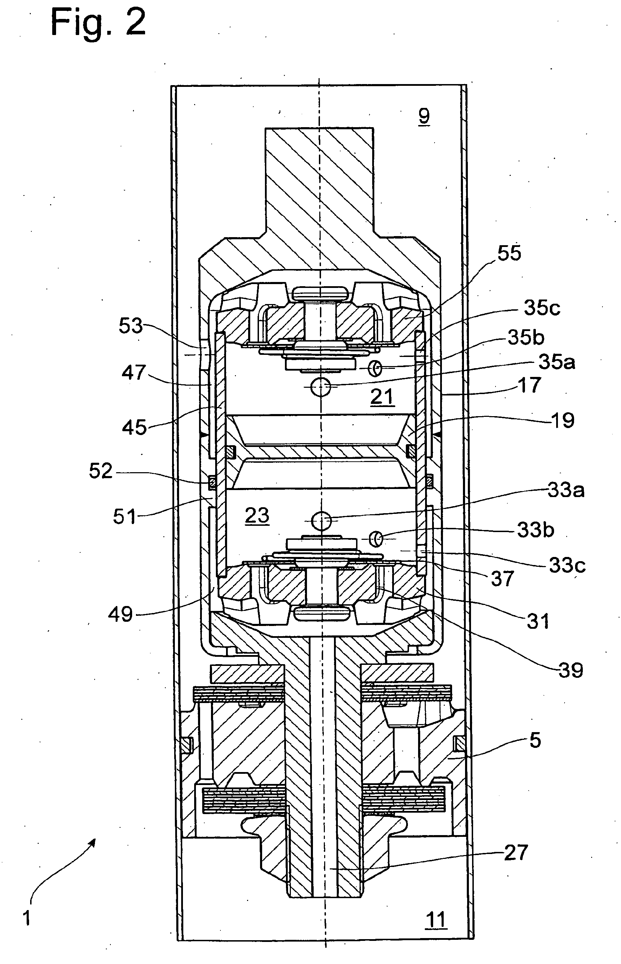

Die Variante nach Fig. 2 funktioniert exakt wie die Lösung nach Fig. 1. Abweichend kommt im Gehäuse 17 ein Rohreinsatz 45 zur Anwendung, der mit der Innenwandung des Gehäuses 17 jeweils einen separaten Einlasskanal 47; 49 für eine Arbeitskammer 21; 23 bildet. Ein umlaufender Steg 51 mit einer Dichtung 52 zwischen der Innenwandung des Gehäuses 17 und dem Rohreinsatz 45 trennt die beiden Einlasskanäle 47; 49 voneinander. Im Gehäuse 17 ist mindestens eine Anschlussöffnung 53 ausgeführt, die mit dem Einlasskanal 47 verbunden ist. In dem Rohreinsatz sind wie in Fig. 1 pro Arbeitskammer mehrere radiale Öffnungen 33a - 33c; 35a - 35c oder alternativ mindestens eine radiale Öffnungen 33; 35 mit abnehmendem Anschlussquerschnitt ausgeführt, die in den Einlasskanälen 47; 49 münden. Zwischen den Enden des Gehäuses 17 und dem Rohreinsatz 45 sind Ventilkörper 31: 35 für Rückschlagventile 37; 41 axial verspannt.

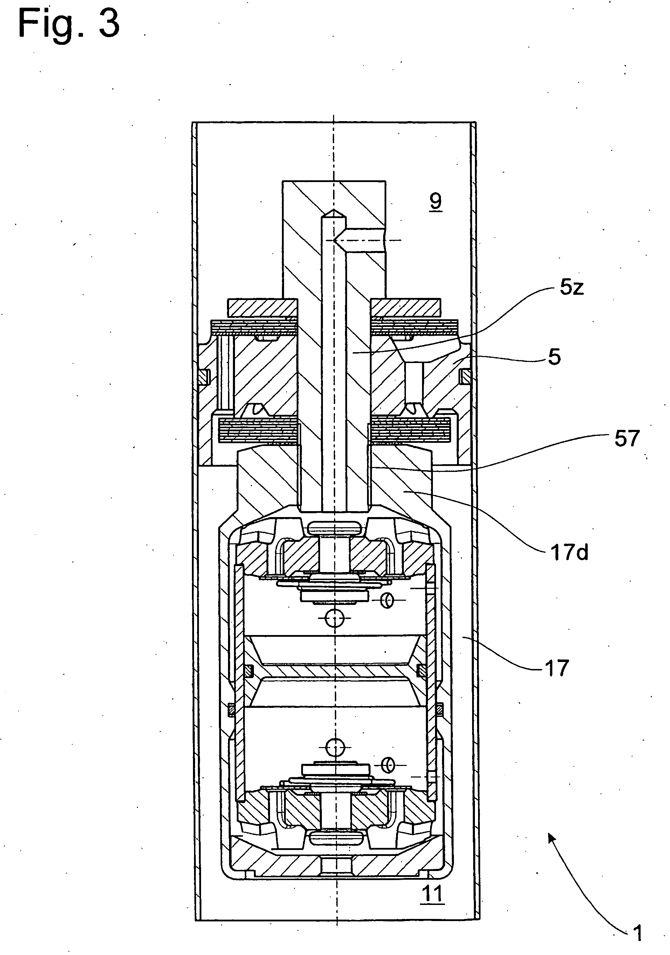

Die Figur 3 zeigt eine Abwandlung zur Fig. 2. Der wesentliche Unterschied besteht darin, dass das Gehäuse 17 im kolbenstangenfernen Arbeitsraum 11 unterhalb des Kolbens 5 angeordnet ist. Ein oberer Deckel 17d ist mit einem Befestigungsgewinde 57 versehen, das den Kolben 5 auf dem Kolbenstangenzapfen 5z fixiert.

Die Fig. 4 zeigt eine Variante zur Fig. 2, bei der ein Voröffnungsquerschnitt 59; 61, der das Ausströmen aus den Arbeitskammern 21; 23 und damit die Dämpfkraft in der Phase der amplitudenabhängigen Dämpfung bestimmt. Dazu sind die beiden Ventilkörper 31; 55 jeweils zweigeteilt und geschichtet ausgeführt. Zwischen den beiden Ventilkörperscheiben 31 a; 31b; 55a; 55b ist mindestens eine Voröffnungsscheibe 57; 59 verspannt. Die Ventilkörperscheiben 31 a; 31 b bzw. 55a; 55b sind zusammen mit den zugehörigen Rückschlagventilen 37; 41 vernietet und können deshalb sehr einfach vor der Montage u. a. auch auf die Drosselwirkung der Voröffnungsscheiben überprüft und damit einer gewünschten Dämpfkraftkennlinie angepasst werden.

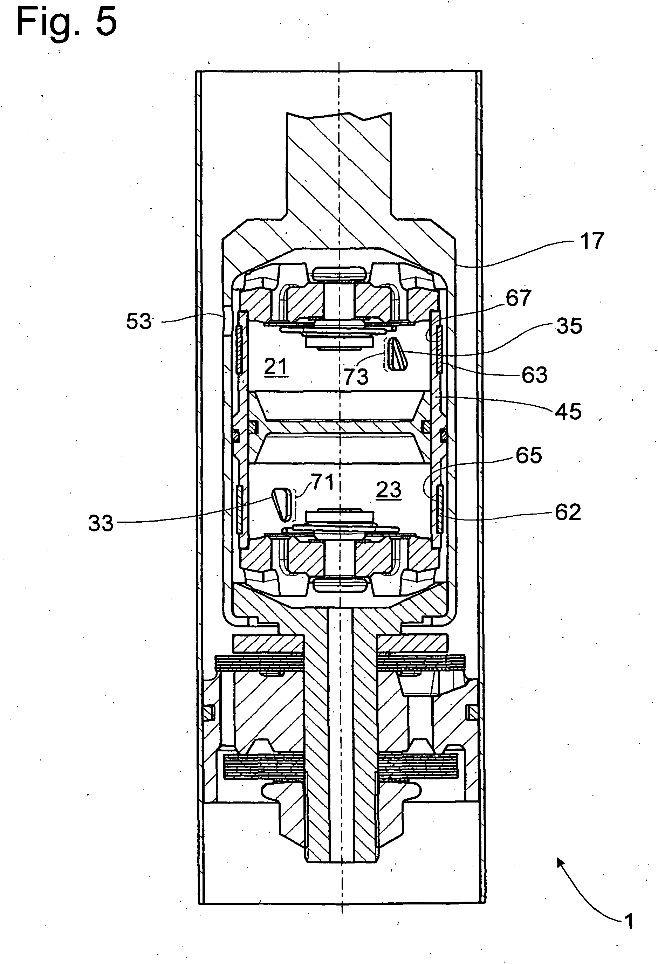

Mit der Fig. 5 soll eine weitere Möglichkeit zur Einstellung eines Voröffnungsquerschnitts dargestellt werden. Aufbauend auf dem Prinzip nach Fig. 2 sind in dem Rohreinsatz 45 pro Arbeitskammer mindestens eine Anschlussöffnung 33; 35 ausgeführt. Radial außenseitig ist pro Arbeitskammer 21; 23 mindestens ein Ringelement 62; 63 in einer Ringnut 65; 67 verspannt. Das Ringelement verfügt über einen Umfangswinkel von mehr als 180° und ist in der Ringnut in Umfangsrichtung verdrehbar. In dem Ringelement ist mindestens eine Einstellöffnung 69; 71 ausgeführt, die in Überdeckung mit der jeweiligen Anschlussöffnung 33; 35 den wirksamen Voröffnungsquerschnitt bestimmt.

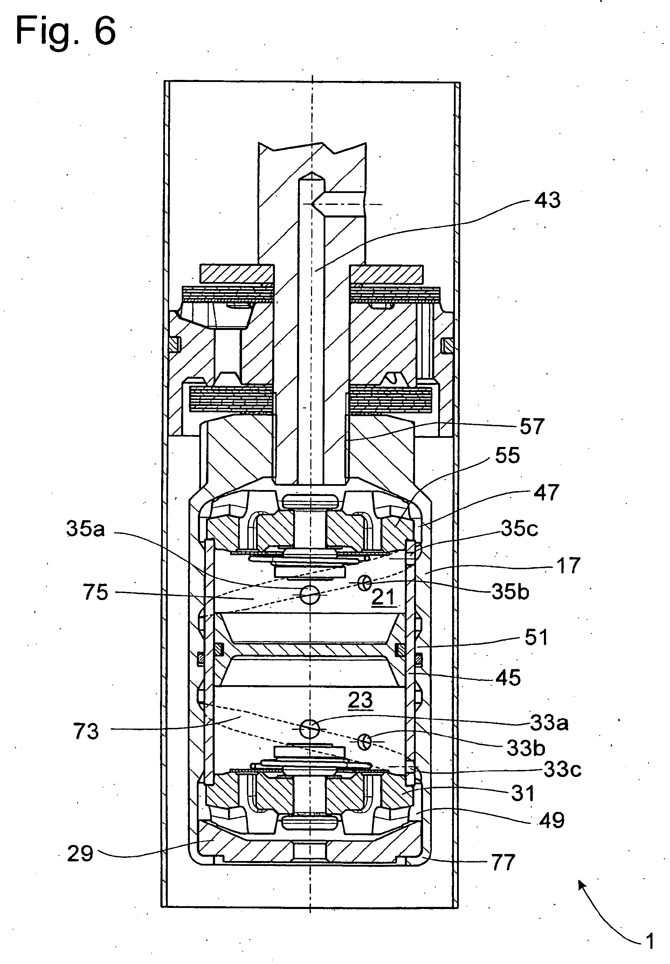

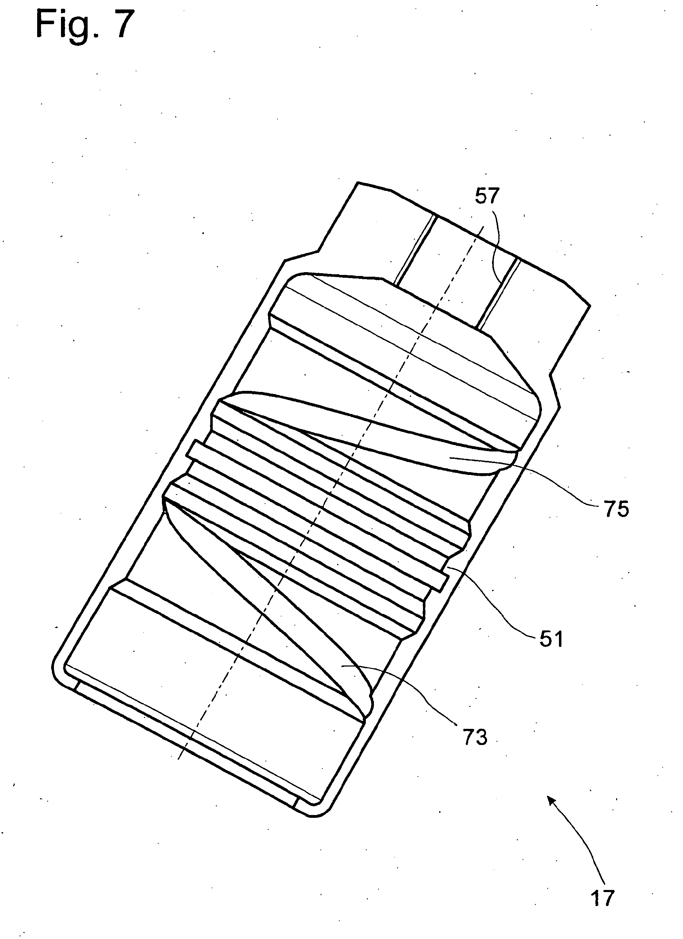

Die Figuren 6 und 7 beschreiben in der Zusammenschau eine Variante, bei der der wirksame Voröffnungsquerschnitt stufenlos einstellbar ist. Ausgehend von der Grundkonstruktion nach Fig. 3 kommt ein Gehäuse 17 zur Anwendung, das an seiner Innenwandung ausgehend von den Ringräumen 47; 49, die von den Ventilkörpern 31; 55 mit dem Gehäuse 17 begrenzt werden, jeweils mindestens eine wendelförmige Nut 73; 75 aufweisen, die sich maximal bis zum umlaufenden Steg 51 erstreckt. Der Rohrkörper 45 liegt großflächig an der Innenwandung des Gehäuses an, so dass der Rohreinsatz 45 mit seiner Außenwandung und das Gehäuse mit seiner Innenwandung durch Nuten 73; 75 einen Kanal begrenzen, wobei die Anschlussöffnungen 33a - 33c; 35a - 35c durch eine Verdrehbewegung des Rohreinsatzes relativ zum Gehäuse in einer gewünschte Überdeckung gebracht werden kann, wobei die Überdeckung den wirksamen Voröffnungsquerschnitt darstellt.

Die Einstellung des wirksamen Voröffnungsquerschnitts kann ganz einfach vor dem Verrollen des Gehäuserandes 77 mit dem Boden 29 vorgenommen werden.

## Patentansprüche

1. Schwingungsdämpfer (1) mit amplitudenselektiver Dämpfkraft, umfassend eine in einem mit Dämpfmedium gefüllten Zylinder (7) axial bewegliche Kolbenstange (3) mit einem Kolben (5), der den Zylinder (7) in zwei Arbeitsräume (9; 11) unterteilt, wobei die Kolbenstange (3) ein Gehäuse (17) trägt, in dem ein scheibenförmigen Trennelement (19) zwei Arbeitskammer (21; 23) trennt, wobei beide Arbeitskammern (21; 23) jeweils über einen Anschlussquerschnitt mit nur einem der Arbeitsräume (9; 11) verbunden sind und der Anschlussquerschnitt für mindestens eine Bewegungsrichtung der Kolbenstange von Trennelement (19) hubabhängig verändert wird,
**dadurch gekennzeichnet,**
**dass** der Anschlussquerschnitt von mindestens einer radialen Öffnung (33; 33a - 33c; 35; 35a - 35c) in der Arbeitskammer (21; 23) gebildet wird und das Trennelement (19) mit der radialen Öffnung (33; 33a - 33c; 35; 35a - 35c) ein Schieberventil bildet.

2. Schwingungsdämpfer nach Anspruch 1,
**dadurch gekennzeichnet,**
**dass** mehrere radiale Öffnungen (33a - 33c; 35a - 35c)in axialem Abstand ausgeführt sind.

3. Schwingungsdämpfer nach Anspruch 1,
**dadurch gekennzeichnet,**
**dass** die Arbeitskammer (21; 23) in Füllrichtung mit einem sich öffnenden Rückschlagventil (37; 41) verbunden ist.

4. Schwingungsdämpfer nach Anspruch 3,
**dadurch gekennzeichnet,**
**dass** das Rückschlagventil (41) an einem zur Anschlussöffnung (33a - 33c) separaten Einlasskanal angeschlossen ist.

5. Schwingungsdämpfer nach Anspruch 3,
**dadurch gekennzeichnet,**
**dass** in dem Gehäuse (17) ein Rohreinsatz (45) angeordnet ist der zumindest einen Teil einer Arbeitskammer (21; 23) und mit der Innenwandung des Gehäuses (17) für mindestens eine Arbeitskammer (21; 23) einen separaten Einlasskanal (47: 49) bildet.

6. Schwingungsdämpfer nach Anspruch 5,
**dadurch gekennzeichnet,**
**dass** zwischen der Innenwandung des Gehäuses (17) und dem Rohreinsatz (45) ein umlaufender Steg (51) ausgeführt ist, der die beiden Einlasskanäle (47; 49) voneinander trennt.

7. Schwingungsdämpfer nach Anspruch 5,
**dadurch gekennzeichnet,**
**dass** der Rohreinsatz (45) zumindest mit einem Ende des Gehäuses (17) einen Ventilkörper (31; 55) des Rückschlagventils (37; 41) axial verspannt.

8. Schwingungsdämpfer nach Anspruch 7,
**dadurch gekennzeichnet,**
**dass** der Ventilkörper (31; 55) zwei geschichteten Ventilkörperscheiben (31 a 31b; 55a; 55b) umfasst und zwischen den beiden Ventilkörperscheiben (31a; 31b; 55a; 55b) eine Voröffnungsscheibe (58; 59) mit einem den Abfluss aus einer Arbeitskammer (21; 23) des Gehäuses (17) bestimmenden Voröffnungsquerschnitt (59; 61) verspannt ist.

9. Schwingungsdämpfer nach Anspruch 5,
**dadurch gekennzeichnet,**
**dass** der Rohreinsatz (45) mit mindestens einer Anschlussöffnung (33a; 33b; 33c 35a; 35b; 35c) ausgeführt ist, die in ihrem wirksamen Querschnitt veränderbar ist

10. Schwingungsdämpfer nach Anspruch 9,
**dadurch gekennzeichnet,**
**dass** ein Ringelement (62; 63) mit einer Einstellöffnung (71; 73) zum Rohreinsatz (45) verstellbar angeordnet ist.

11. Schwingungsdämpfer nach Anspruch 10,
**dadurch gekennzeichnet,**
**dass** das Ringelement (62; 63) radial mit dem Rohreinsatz (45) verspannt ist.

12. Schwingungsdämpfer nach Anspruch 5,
**dadurch gekennzeichnet,**
**dass** der Rohreinsatz (45) und das Gehäuse (17) mindestens einen Kanal (73 75) begrenzen, wobei die die mindestens Anschlussöffnung (33a - 33c; 35a - 35c) durch eine Verdrehbewegung des Rohreinsatzes (45) relativ zum Gehäuse (17) in Überdeckung gebraucht werden kann.

## Claims

1. Vibration damper (1) having selective damping-force amplitude, comprising a piston rod (3) which is axially movable in a cylinder (7) filled with damping medium and which has a piston (5) which subdivides the cylinder (7) into two working spaces (9; 11), the piston rod (3) carrying a housing (17) in which a disc-shaped separating element (19) separates two working chambers (21; 23), the two working chambers (21; 23) in each case being connected via a connecting cross section to only one of the working spaces (9; 11), and the connecting cross section being varied in a stroke-dependent manner by the separating element (19) for at least one direction of movement of the piston rod, **characterized in that** the connecting cross section is formed by at least one radial orifice (33; 33a-33c; 35; 35a-35c) in the working chamber (21; 23), and the separating element (19) forms a slide valve with the radial orifice (33; 33a-33c; 35; 35a-35c).

2. Vibration damper according to Claim 1, **characterized in that** a plurality of radial orifices (33a-33c; 35a-35c) are formed at an axial distance from one another.

3. Vibration damper according to Claim 1, **characterized in that** the working chamber (21; 23) is connected in the filling direction to an opening non-return valve (37; 41).

4. Vibration damper according to Claim 3, **characterized in that** the non-return valve (41) is connected to an inlet duct separate from the connecting orifice (33a-33c).

5. Vibration damper according to Claim 3, **characterized in that** a tubular insert (45) is arranged in the housing (17) and forms at least part of a working chamber (21; 23) and with the inner wall of the housing (17), for at least one working chamber (21; 23), a separate inlet duct (47; 49).

6. Vibration damper according to Claim 5, **characterized in that** a peripheral web (51) which separates the two inlet ducts (47; 49) from one another is formed between the inner wall of the housing (17) and the tubular insert (45).

7. Vibration damper according to Claim 5, **characterized in that** the tubular insert (45) braces axially, at least with one end of the housing (17), a valve body (31; 55) of the non-return valve (37; 41).

8. Vibration damper according to Claim 7, **characterized in that** the valve body (31; 55) comprises two layered valve-body discs (31a; 31b; 55a; 55b), and between the two valve-body discs (31a; 31b; 55a; 55b) is braced a preopening disc (58; 59) having a preopening cross section (59; 61) which determines the outflow from a working chamber (21; 23) of the housing (17).

9. Vibration damper according to Claim 5, **characterized in that** the tubular insert (45) is formed with at least one connecting orifice (33a; 33b; 33c; 35a; 35b; 35c), the effective cross section of which is variable.

10. Vibration damper according to Claim 9, **characterized in that** a ring element (62; 63) is arranged adjustably with respect to the tubular insert (45) by means of a setting orifice (71; 73).

11. Vibration damper according to Claim 10, **characterized in that** the ring element (62; 63) is braced radially with the tubular insert (45).

12. Vibration damper according to Claim 5, **characterized in that** the tubular insert (45) and the housing (17) delimit at least one duct (73; 75), while the at least one connecting orifice (33a-33c; 35a-35c) can be brought into overlap in relation to the housing (17) by means of a rotational movement of the tubular insert (45).

## Revendications

1. Amortisseur d'oscillations (1) avec une force d'amortissement à amplitude sélective, comprenant une tige de piston (3) déplaçable axialement dans un cylindre (7) rempli de fluide d'amortissement, avec un piston (5), qui divise le cylindre (7) en deux espaces de travail (9 ; 11), la tige de piston (3) portant un boîtier (17) dans lequel un élément de séparation en forme de disque (19) sépare deux chambres de travail (21 ; 23), les deux chambres de travail (21 ; 23) étant connectées à chaque fois par le biais d'une section transversale de raccordement à seulement l'un des espaces de travail (9 ; 11) et la section transversale de raccordement étant modifiée en fonction de la course pour au moins un sens de déplacement de la tige de piston par l'élément de séparation (19),
**caractérisé en ce que**
la section transversale de raccordement est formée par au moins une ouverture radiale (33 ; 33a - 33c ; 35 ; 35a - 35c) dans la chambre de travail (21 ; 23) et l'élément de séparation (19) formant avec l'ouverture radiale (33 ; 33a - 33c ; 35 ; 35a - 35c) une soupape à tiroir.

2. Amortisseur d'oscillations selon la revendication 1,
**caractérisé en ce que**
plusieurs ouvertures radiales (33a - 33c ; 35a - 35c) sont réalisées à distance axiale.

3. Amortisseur d'oscillations selon la revendication 1,
**caractérisé en ce que**
la chambre de travail (21 ; 23) est connectée dans la direction de remplissage à une soupape de non-retour (37 ; 41) s'ouvrant.

4. Amortisseur d'oscillations selon la revendication 3,
**caractérisé en ce que**
la soupape de non-retour (41) est raccordée à un canal d'entrée séparé par rapport à l'ouverture de raccordement (33a - 33c).

5. Amortisseur d'oscillations selon la revendication 3,
**caractérisé en ce que**
l'on dispose dans le boîtier (17) un insert tubulaire (45) qui forme au moins une partie d'une chambre de travail (21 ; 23) et avec la paroi interne du boîtier (17), un canal d'entrée séparé (47 ; 49) pour au moins une chambre de travail (21 ; 23).

6. Amortisseur d'oscillations selon la revendication 5,
**caractérisé en ce**
**qu'**une nervure périphérique (51) est réalisée entre la paroi interne du boîtier (17) et l'insert tubulaire (45), laquelle sépare les deux canaux d'entrée (47 ; 49) l'un de l'autre.

7. Amortisseur d'oscillations selon la revendication 5,
**caractérisé en ce que**
l'insert tubulaire (45) au moins avec une extrémité du boîtier (17) contraint axialement au moins un corps de soupape (31 ; 55) de la soupape de non-retour (37 ; 41).

8. Amortisseur d'oscillations selon la revendication 7,
**caractérisé en ce que**
le corps de soupape (31 ; 55) comprend deux disques de corps de soupape revêtus (31a ; 31b ; 55a ; 55b) et un disque de pré-ouverture (58 ; 59) avec une section transversale de pré-ouverture (59 ; 61) définissant l'écoulement hors d'une chambre de travail (21 ; 23) du boîtier (17) est contraint entre les deux disques de corps de soupape (31a ; 31b ; 55a ; 55b).

9. Amortisseur d'oscillations selon la revendication 5,
**caractérisé en ce que**
l'insert tubulaire (45) est réalisé avec au moins une ouverture de raccordement (33a ; 33b ; 33c ; 35a ; 35b ; 35c) dont la section transversale active peut être modifiée.

10. Amortisseur d'oscillations selon la revendication 9,
**caractérisé en ce**
**qu'**un élément annulaire (62 ; 63) avec une ouverture d'ajustement (71 ; 73) est disposé de manière réglable par rapport à l'insert tubulaire (45).

11. Amortisseur d'oscillations selon la revendication 10,
**caractérisé en ce que**
l'élément annulaire (62 ; 63) est contraint radialement avec l'insert tubulaire (45).

12. Amortisseur d'oscillations selon la revendication 5,
**caractérisé en ce que**
l'insert tubulaire (45) et le boîtier (17) délimitent au moins un canal (73 ; 75), l' au moins une ouverture de raccordement (33a - 33c ; 35a - 35c) pouvant être amenée en chevauchement par un mouvement de rotation de l'insert tubulaire (45) par rapport au boîtier (17).
